# EUROPÄISCHE PATENTSCHRIFT

(11) **EP 0 565 063 B1**
(45) Veröffentlichungstag und Bekanntmachung des Hinweises auf die Patenterteilung: **22.05.1996**
(21) Anmeldenummer: 93105700.4
(22) Anmeldetag: 06.04.1993
(51) Int. Cl.: F16D 23/14

(54) **Ausrückeranordnung für eine Kraftfahrzeug-Reibungskupplung**
Clutch release device for a friction clutch of an automobile vehicle
Butée d'embrayage pour un embrayage à friction de véhicule automobile

(30) Priorität: 06.04.1992 DE 4211476; 06.04.1992 DE 4211477; 06.04.1992 DE 4211478; 06.02.1993 DE 4303489
(43) Veröffentlichungstag der Anmeldung: 13.10.1993
(60) Teilanmeldung: 95117531.4
(73) Patentinhaber: Fichtel & Sachs AG, D-97419 Schweinfurt (DE)
(72) Erfinder: Mischler, Manfred, W-8723 Frankenwinheim (DE); Müller, Roland, W-8721 Geldersheim (DE); Riese, Hans-Walter, W-8721 Schwebheim (DE); Müller, Karl, W-8721 Poppenhausen (DE); Stürmer, Winfried, W-8721 Euerbach (DE); Husse, Ulrich, W-8720 Schweinfurt (DE)
(74) Vertreter: Liska, Horst, Dr.-Ing.

(56) Entgegenhaltungen:
- EP-A- 0 153 087
- FR-A- 834 298
- FR-A- 2 539 473
- FR-A- 2 622 265
- FR-A- 2 629 882
- FR-A- 2 688 039
- GB-A- 2 138 095
- GB-A- 2 259 345

## Beschreibung

Die Erfindung betrifft eine Ausrückeranordnung für eine im Antriebsstrang zwischen einer Brennkraftmaschine und einem Getriebe eines Kraftfahrzeugs angeordnete Reibungskupplung.

Aus DE-A-35 37 788, DE-A-39 19 943 und DE-A-39 19 944 sind Ausrückeranordnungen für eine im Antriebsstrang zwischen einer Brennkraftmaschine und einem Getriebe eines Kraftfahrzeugs angeordnete Reibungskupplung bekannt, deren zusammen mit der Reibungskupplung um eine Drehachse rotierende, durch Federzungen einer Membranfeder gebildete Ausrückelemente im wesentlichen radial zur Drehachse hin sich erstrecken. Die Federzungen werden zum Ausrücken der Reibungskupplung mittels der Ausrückeranordnung zum Getriebe hin gezogen. Die Ausrückeranordnung umfaßt hierzu einen konzentrisch zur Drehachse an den Federzungen befestigten Ausrückring, der sich auf der Motorseite der Federzungen abstützt und ein in Richtung der Drehachse bewegliches, beispielsweise an dem Getriebe verschiebbar geführtes Ausrücklager mit einem rotierenden inneren Lagerring und einem nicht rotierenden äußeren Lagerring. Um das Ausrücklager, welches sich in aller Regel nur schwer zugänglich in einer die Kupplung umschließenden Glocke des Getriebes befindet, leichter montieren zu können, sind axial miteinander kuppelbare Schnappverbindungsmittel zwischen dem Ausrückring und dem rotierenden Lagerring vorgesehen. Die Schnappverbindungsmittel werden durch annähernd konisch verlaufende Kraftübertragungs-Ringflächen an dem Ausrückring und dem rotierenden Lagerring gebildet und umfassen einen radial federnden Lastübertragungsring, welcher zwischen die Kraftübertragungs-Ringflächen schnappbar ist.

Bei den bekannten Ausrückeranordnungen müssen die Schnappverbindungsmittel durch Vorspannkräfte innerhalb des Kupplungsbetätigungssystems in Auskuppelrichtung vorbelastet werden, um sicherzustellen, daß die Bauteile der Schnappverbindung stets in gegenseitiger Anlage verbleiben. Im Betrieb des Kraftfahrzeugs ist es jedoch nicht immer möglich diese Vorbelastung dauernd aufrecht zu erhalten und zugleich für möglichst geringe Vorspannkräfte zu sorgen. Zu hohe Vorspannkräfte an dieser Stelle können die Lebensdauer des Ausrücklagers verringern und zugleich die Funktion der Reibungskupplung beeinträchtigen, da die Vorspannkräfte der Kraft der Kupplungshauptfeder entgegenwirken. Beispielsweise kann unter bestimmten Umständen durch Vibrationen der Brennkraftmaschine der Anlagekontakt der Einzelteile der Schnappverbindung kurzfristig verlorengehen, so daß an diesen Stellen erhöhter Verschleiß auftritt.

Aus GB 2 138 095 A ist es bekannt, die vorstehenden Nachteile dadurch zu vermeiden, daß auf der Getriebeseite einer die Kupplungshauptfeder bildenden Membranfeder eine Vorspannfeder angeordnet ist, die sich mit ihrem Außenumfang an den Federzungen der Membranfeder und ihrem Innenumfang in einer Ringnut des rotierenden Lagerrings des Ausrücklagers abstützt. Die Vorspannfeder sorgt unabhängig von eventuell über das Kupplungsbetätigungssystem ausgeübten Kräften für einen dauernden Anlagekontakt, der auch bei dieser Ausrückeranordnung den rotierenden Lagerring mit dem motorseitig an den Membranfederzungen anliegenden Ausrückring kuppelnden Schnappverbindungsmitteln.

Es ist Aufgabe der Erfindung, eine Ausrückeranordnung der vorstehend erläuterten Art, bei welcher durch Vorspannung der Verschleiß im Betrieb gemindert wird, so zu verbessern, daß die Montage der Ausrückeranordnung erleichtert wird. Dies soll möglichst platzsparend erfolgen, um die Bedienbarkeit der Ausrückeranordnung nicht zu beeinträchtigen.

Die Erfindung geht aus von einer Ausrückeranordnung für eine im Antriebsstrang zwischen einer Brennkraftmaschine und einem Getriebe eines Kraftfahrzeugs angeordneten Reibungskupplung, deren zusammen mit der Reibungskupplung um eine Drehachse rotierende, insbesondere durch Federzungen einer Membranfeder gebildete, im wesentlichen radial zur Drehachse hin sich erstreckende Ausrückelemente zum Ausrücken der Reibungskupplung zum Getriebe hin bewegbar sind, wobei die Ausrückeranordnung umfaßt:
- einen konzentrisch zur Drehachse an den Ausrückelementen befestigten, auf der Motorseite der Ausrückelemente abgestützten Ausrückring,
- ein in Richtung der Drehachse bewegliches Ausrücklager mit einem rotierenden, insbesondere inneren Lagerring und einem nicht rotierenden, insbesondere äußeren Lagerring und
- axial miteinander kuppelbare Schnappverbindungsmittel zwischen dem Ausrückring und dem rotierenden Lagerring, umfassend Kraftübertragungsflächen, insbesondere angenähert konisch verlaufende Kraftübertragungs-Ringflächen an dem Ausrückring und dem rotierenden Lagerring und wenigstens ein radial federndes Lastübertragungselement, insbesondere in Form eines radial federnden Lastübertragungsrings, welches zwischen die Kraftübertragungsflächen schnappbar ist, wobei zwischen dem Ausrückring oder den Ausrückelementen einerseits und dem rotierenden Lagerring andererseits ein im wesentlichen ringförmiges, im wesentlichen axial federndes, zur Drehachse konzentrisches Vorspannelement eingespannt ist, welches auf der Getriebeseite der Ausrückelemente angeordnet ist und die Schnappverbindungsmittel axial gegeneinander verspannt.

Die erfindungsgemäße Verbesserung einer solchen Ausrückeranordnung ist dadurch gekennzeichnet, daß von dem Flansch des Ausrückrings in Umfangsrichtung verteilt, mehrere Krallen abstehen, die durch Zwischenräume zwischen den Ausrückelementen hindurchreichen und auf der Getriebeseite der Ausrückelemente nach radial innen gebogen sind, daß das Vorspannelement in Umfangsrichtung verteilt wenigstens drei Federabschnitte mit je einem axial federnden, am rotierenden Lagerring abgestützten, angenähert radial verlaufenden Federarm aufweist und daß sich das Vorspannelement in Umfangsrichtung durch die Krallen hindurcherstreckt und in den Krallen durch radiale Eigenspannung gehalten ist.

Das Vorspannelement sorgt zunächst in an sich bekannter Weise unabhängig von eventuell über das Kupplungsbetätigungssystem ausgeübten Kräften für einen dauernden Anlagekontakt zwischen den Kraftübertragungsflächen, die sich über das Lastübertragungselement aneinander abstützen. Das Vorspannelement kann speziell dieser Aufgabe angepaßt werden, so daß auch kurzfristiger Verlust des Anlagekontakts vermieden wird. Da das Vorspannelement im Bereich des rotierenden Lagerrings und des Ausrückrings bzw. der Ausrückelemente angeordnet ist, ist nur wenig zusätzlicher Bauraum erforderlich. Das Vorspannelement befreit das Kupplungsbetätigungssystem einschließlich des Ausrücklagers vor einer eventuellen Überlastung aufgrund der für die Vorspannung der Schnappverbindungsmittel bisher erforderlichen Kräfte in dem Betätigungssystem.

Während bei herkömmlichen Ausführungsformen der Ausrückeranordnung die Krallen einen Haltering aufnehmen, der ausschließlich der Fixierung des Ausrückrings an den Ausrückelementen dient, ist gemäß der Erfindung vorgesehen, daß das Vorspannelement in Umfangsrichtung verteilt wenigsten drei Federabschnitte mit je einem axial federnden am rotierenden Lagerring abgestützten, angenähert radial verlaufenden Federarm aufweist und daß sich das Vorspannelement in Umfangsrichtung durch die Krallen hindurch erstreckt und in den Krallen durch radiale Eigenspannung gehalten ist. Das Vorspannelement dient damit nicht nur zur axialen Verspannung der Schnappverbindungsmittel, sondern sichert auch den Ausrückring an den Ausrückelementen. Darüber hinaus kann das Vorspannelement an den Ausrückelementen der Reibungskupplung vormontiert werden. Die Schnappverbindung kann geschlossen werden, ohne daß zusätzliche lose Teile montiert werden müßten.

Bei dem durch die Krallen hindurchgeführten Vorspannelement kann es sich um ein Federblechteil oder dergleichen handeln. Bevorzugt ist das Vorspannelement jedoch als Drahtfeder, beispielsweise als in Umfangsrichtung zum Beispiel durch Verschweißen geschlossener Drahtfederring ausgebildet. Solche Ausgestaltungen lassen sich nicht nur leicht und aus billigen Ausgangsmaterialien herstellen, sondern auch problemlos montieren, da der Drahtfederring insgesamt elastisch ist. Auf der den Ausrückelementen zugewandten Seite kann an dem Drahtfederring mindestens eine zwischen die Ausrückelemente greifende Nase zur Positionierung des Drahtfederrings relativ zu den Ausrückelementen angebogen sein. Die Nase kann die Form einer in den Drahtring eingebrachten Sicke haben, so daß sie bei durch Federzungen einer Membranfeder gebildeten Ausrückelementen in die Schlitze zwischen den Federzungen eingreifen kann. Auf diese Weise wird nicht nur eine Sicherung gegen Verdrehen erreicht, sondern es wird auch verhindert, daß sich der Drahtring zwischen den Krallen und den Federzungen der Membranfeder verklemmen kann.

Als Variante zu einem als geschlossenen Drahtfederring ausgebildeten Vorspannelement, kann das Vorspannelement auch eine die Enden des Lastübertragungsrings aufnehmende Unterbrechung zwischen zwei benachbarten, auf gegenüberliegenden Seiten der Enden des Lastübertragungsrings angeordneten Krallen bilden, also im wesentlichen eine bogenförmig gekrümmte Form haben. Auch hier ist das Vorspannelement bevorzugt als Drahtfeder ausgebildet. Zur Positionierung kann es zwischen diese beiden der Unterbrechung benachbarten Krallen nach radial außen gebogene Endabschnitte haben. Auf diese Weise erübrigt sich auch eine gesonderte Sicherung gegen Verdrehen.

Um mit einem Minimum an Federarmen auszukommen, werden bevorzugt drei solcher Federarme am Umfang verteilt vorgesehen. Einer dieser Federarme liegt zweckmäßigerweise den Enden des Lastübertragungsrings etwa diametral gegenüber. Die beiden anderen Federarme sind bevorzugt im Bereich der beiden der Unterbrechung benachbarten Krallen vorgesehen. Diese Anordnungsweise erleichtert die Montage des Vorspannelements und sorgt für eine in Umfangsrichtung zumindest annähernd gleichmäßige Axialkraftverteilung. Die beiden anderen Federarme können zwischen der zur Unterbrechung benachbarten Kralle und einer zu dieser in Umfangsrichtung benachbarten weiteren Kralle angeordnet sein. Damit ist eine einfache Montage und im Betrieb eine hinreichende Fixierung dieser Federarme im Abstand zu-den Enden des Lastübertragungsrings gewährleistet.

Zumindest einer der Federarme, vorzugsweise jedoch sämtliche Federarme haben im wesentlichen U-Form und umfassen zwei angenähert radial verlaufende Schenkel, die an ihren radial inneren Enden ineinander übergehen. An ihren radial äußeren Enden gehen die Schenkel in angenähert radial verlaufende Arme der einzelnen Federabschnitte der Drahtfeder über. In einer solchen Ausgestaltung lassen sich auch bei kleinen Abmessungen der Drahtfeder haltbare, über hinreichend große Federwege auslenkbare Vorspannelemente auf einfache Weise herstellen. Auch die Montage der Drahtfeder ist verhältnismäßig einfach, da die Arme für eine radiale Elastizität sorgen. Die Verbindungsbereiche zwischen den radial äußeren Enden der Schenkel des Federarms und den radial verlaufenden Armen können hierbei als schraubenförmig gewundene Biegefedern oder haarnadelfederförmige Federwindungen ausgebildet sein, wodurch der radiale Bauraum des Vorspannelements begrenzt werden kann.

Insbesondere bei in Umfangsrichtung und radial eingeschränktem Bauraum ist eine Ausgestaltung von Vorteil, bei der die beiden weiteren Federarme auf der den Enden des Lastübertragungsrings abgewandten Seite der beiden der Unterbrechung benachbarten Krallen angeordnet sind und an ihren radial äußeren Enden mit je einem angenähert radial verlaufenden Arm des Federabschnitts über eine schraubenförmig gewundene Biegefeder bzw. haarnadelfederförmige Federwindung verbunden sind. Die Biegefeder liegt der zur Unterbrechung benachbarten Kralle im wesentlichen radial gegenüber und der Arm ist an seinem radial inneren Ende abgebogen und verläuft mit dieser Abbiegung durch die Kralle.

Es versteht sich, daß das durch die Drahtfeder gebildete Vorspannelement auch mehr als drei Federarme haben kann, wobei die mit dieser Vielzahl von Federarmen verbundenen radial verlaufenden Arme an ihren radial inneren Enden in Abbiegungen übergehen, die durch je eine der Krallen geführt sind. Eine solche Drahtfeder kann insbesondere Mäanderform mit gleichförmigen, abwechselnd einen Federarm oder einen durch eine der Krallen geführten Arm bildende Windungen haben. Die Drahtfeder läßt sich dann als bandförmiges Bauteil herstellen, was preiswert möglich ist und das bandförmige Bauteil kann darüber hinaus einfach montiert werden.

Die Federarme liegen zweckmäßigerweise in axialer Richtung an einer ringförmigen Scheibe an, die sich an einem axial zur Stirnfläche des Ausrückrings weisenden Absatz des rotierenden Lagerrings abstützt. Auf diese Weise wird die Gestaltungsfreiheit für den rotierenden Lagerring, d.h. den inneren Lagerring des Ausrücklagers, der zugleich eine Komponente der Schnappverbindung ist, nicht beschränkt.

Die vorteilhaft zur axialen Abstützung des Vorspannelements am rotierenden, inneren Lagerring angeordnete Scheibe kann zugleich für eine Verbesserung der Lagerabdichtung ausgenutzt werden. Der nicht rotierende, äußere Lagerring ist hierzu auf seiner den Ausrückelementen zugewandten Seite mit einer nach radial innen reichenden, in geringem Abstand vom rotierenden, inneren Lagerring endenden Deckscheibe versehen, während die am rotierenden Lagerring in geringem Abstand zur Deckscheibe angeordnete, das Vorspannelement abstützende Scheibe zusammen mit der Deckscheibe eine Labyrinthdichtung bildet. Aufgrund der radialen Überdeckung dieser Scheibe und der Deckscheibe kann zumindest auf dieser Seite des Ausrücklagers der Aufwand für die Lagerabdichtung vermindert werden.

Die Schnappverbindungsmittel wurden vorstehend im zusammenhang mit konischen Lastübertragungs-Ringflächen und einem Lastübertragungsring beschrieben. Es versteht sich, daß auch andere Ausführungsformen von Schnappverbindungsmitteln eingesetzt werden können. Insbesondere sollen unter konischen Ringflächen allgemein sich in axialer Richtung verjüngende Ringflächen verstanden werden, deren Krümmung z.B. der Materialquerschnittrundung des Lastübertragungsrings zur Minderung der Flächenpressung angepaßt ist. Ferner wurden die Ausrückelemente im vorstehenden als Federzungen einer die Kupplungshauptfeder bildenden Membranfeder beschrieben. Bei den Ausrückelementen kann es sich aber auch um Ausrückhebel handeln, die mit einer separaten Kupplungshauptfeder zusammenwirken.

Im folgenden werden Ausführungsbeispiele der Erfindung anhand einer Zeichnung näher erläutert. Hierbei zeigt:
- Figur 1: einen teilweisen Axiallängsschnitt durch eine Kraftfahrzeug-Reibungskupplung mit einer Schnappverbindungsmittel umfassenden Ausrückeranordnung;
- Figur 2: eine Axialansicht einer erfindungsgemäßen Ausführungsform der Ausrückeranordnung mit einer Drahtfeder zur Vorspannung der Schnappverbindung;
- Figur 3: einen teilweisen Axiallängsschnitt durch die Ausrückeranordnung, gesehen entlang einer Linie III-III in Figur 2;
- Figur 4: eine Draufsicht auf die Drahtfeder vor Einbau in die Ausrückeranordnung;
- Figur 5: eine Axialansicht einer Variante der Ausrückeranordnung nach Figur 2;
- Figur 6: einen teilweisen Axiallängsschnitt durch die Ausrückeranordnung, gesehen entlang einer Linie VI-VI in Figur 5;
- Figur 7 und 8: Axialansichten weiterer Varianten der Ausrückeranordnung nach Figur 2;
- Figur 9: eine Draufsicht auf die Drahtfeder der Ausrückeranordnung nach Figur 8;
- Figur 10: eine Axialansicht einer noch weiteren Variante einer erfindungsgemäßen Ausrückeranordnung mit einer ringförmig geschlossenen Drahtfeder zur Vorspannung der Schnappverbindung;
- Figur 11: eine Draufsicht auf die ringförmig geschlossene Drahtfeder aus Figur 10;
- Figur 12: eine Schnittansicht der Drahtfeder, gesehen entlang einer Linie XII-XII in Figur 11 und
- Figur 13: eine Detailansicht der Drahtfeder gesehen in Richtung eines Pfeils XIII aus Figur 11.

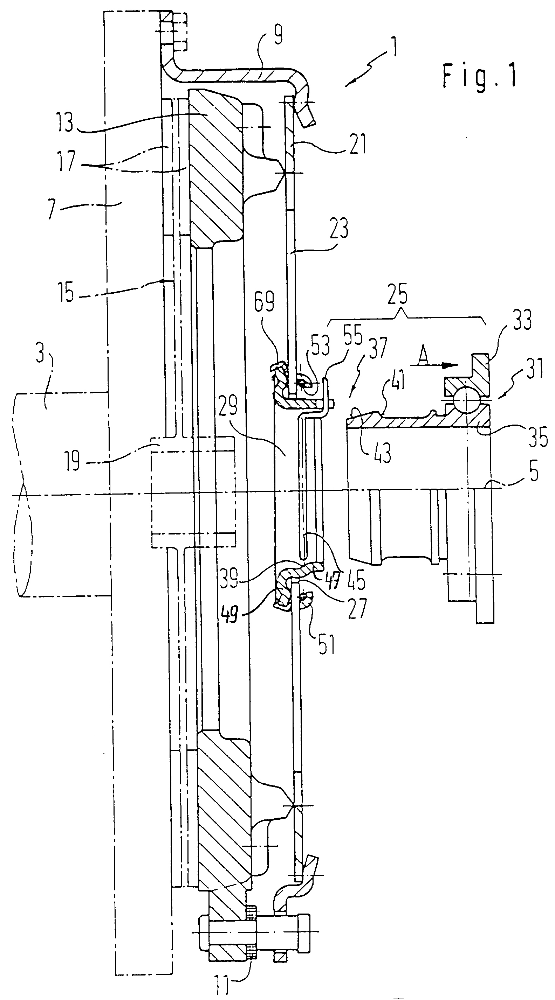

Fig. 1 zeigt schematisch eine im Antriebsstrang eines Kraftfahrzeugs zwischen dessen Brennkraftmaschine und Getriebe angeordnete Reibungskupplung 1. Die Reibungskupplung 1 umfaßt ein an einer Kurbelwelle 3 der Brennkraftmaschine gleichachsig zu deren Drehachse 5 befestigtes Schwungrad 7, ein am Schwungrad 7 gehaltenes Kupplungsgehäuse 9, an welchem über Tangentialblattfedern 11 eine Anpreßplatte 13 drehfest aber axial beweglich geführt ist. Zwischen der Anpreßplatte 13 und dem Schwungrad 7 ist eine Kupplungsscheibe 15 mit ihren Reibbelägen 17 einspannbar. Die Kupplungsscheibe 15 hat eine Nabe 19, die mit einer nicht näher dargestellten Getriebeeingangswelle eines der Kurbelwelle 3 bzw. der Brennkraftmaschine axial gegenüberliegend angeordneten Getriebes des Kraftfahrzeugs kuppelbar ist. Das Schwungrad 7 und/oder die Kupplungsscheibe 15 können in herkömmlicher Weise mit einem Drehschwingungsdämpfer versehen sein. Zwischen dem Kupplungsgehäuse 9 und der Anpreßplatte 13 ist eine Kupplungshauptfeder, hier eine Membranfeder 21 eingespannt, die eine Vielzahl von deren Innenumfang radial nach innen abstehende, durch radial verlaufende Schlitze voneinander getrennte Federzungen 23 hat. Die Membranfeder 21 spannt die Reibbeläge 17 der Kupplungsscheibe 15 zwischen der Anpreßplatte 13 und dem Schwungrad 7 ein. Die Federzungen 23 bilden Ausrückelemente, über die die Reibungskupplung 1 ausgekuppelt werden kann, wenn die Federzungen 23 mittels einer allgemein mit 25 bezeichneten Ausrückeranordnung in Richtung eines Pfeils A vom Schwungrad 7 weggezogen werden. Um dies zu ermöglichen, stützt sich die Membranfeder 21 mit ihrem Außenumfang am Kupplungsgehäuse 9 und auf einem kleineren Durchmesser an der Anpreßplatte 13 ab. Auf die Ausrückeranordnung 25 wirkende Komponenten eines Kupplungsbetätigungssystems sind nicht dargestellt.

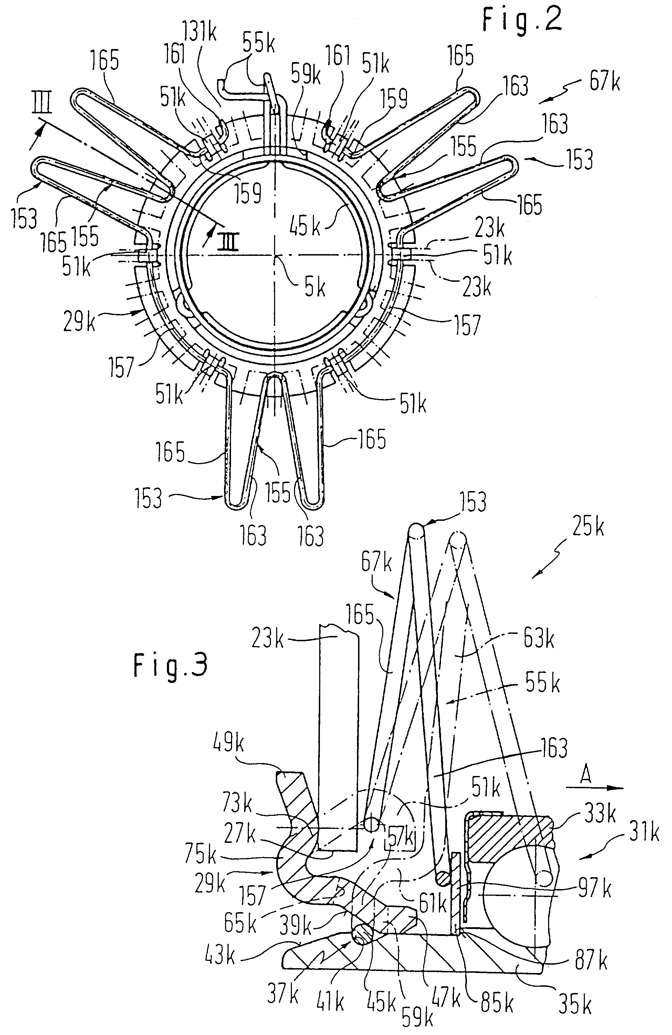

Die Ausrückeranordnung 25 umfaßt einen an den radial inneren Enden der eine zentrische Durchtrittsöffnung 27 für die nicht näher dargestellte Getriebeeingangswelle definierenden Federzungen 23 befestigten Ausrückring 29 sowie ein Ausrücklager 31 mit einem nicht rotierenden äußeren Lagerring 33, an welchem das nicht näher dargestellte Kupplungsbetätigungssystem angreift und einem rotierenden, inneren Lagerring 35. Der rotierende Lagerring 35 ist über allgemein mit 37 bezeichnete Schnappverbindungsmittel mit dem Ausrückring 29 kuppelbar. Fig. 1 zeigt hierbei die Schnappverbindungsmittel 37 vor dem Zusammenbau, während Fig. 2 die geschlossenen Schnappverbindungsmittel zeigt.

Zur Bildung der Schnappverbindungsmittel 37 ist an dem Innenumfang des Ausrückrings 29 eine zum Ausrücklager 31 hin sich verjüngende, im wesentlichen konische Kraftübertragungs-Ringfläche 39 angeformt, während der rotierende Lagerring 35 an seinem Außenumfang eine zur Kurbelwelle hin sich bogenförmig oder konisch verlaufend erweiternde Kraftübertragungs-Ringfläche 41 hat. Die Kraftübertragungs-Ringfläche 41 setzt sich zum kurbelwellenseitigen Stirnende des inneren Lagerrings 35 hin in einer sich verjüngenden Konusfläche 43 fort. In dem Ausrückring 29 ist ein radial federnder Lastübertragungsring 45 angeordnet, der, wie z.B. Fig. 2 zeigt, bei geschlossener Schnappverbindungsmitteln 37 zwischen den Kraftübertragungs-Ringflächen 39, 41 liegt, so daß die Ausrückzugkraft in Richtung des Pfeils A vom Ausrücklager 31 auf die Federzunge 23 übertragen werden kann.

Der Ausrückring 29 hat, wie Fig. 2 zeigt, einen im wesentlichen axial sich erstreckenden Ringbereich 47, dessen Innenumfang die Kraftübertragungs-Ringfläche 39 bildet und einen die Federzungen 23 auf der Motorseite hintergreifenden, radial abstehenden, im wesentlichen ringförmigen Flansch 49. Der Ausrückring 29 greift mit mehreren, in Umfangsrichtung verteilten Krallen 51 durch die Schlitze zwischen benachbarten Federzungen 23 hindurch und ist auf der Getriebeseite der Federzungen 23 mittels eines in die Krallen eingreifenden, nachfolgend an Hand der Fig. 2 bis 13 erläuterten Vorspannelementes an den Federzungen 23 befestigt. Der Lastübertragungsring 45 ist als offener radial federnder Ring ausgebildet, dessen Enden 55, wie z.B. Fig. 3 zeigt, zunächst mit einem Abschnitt 57k im wesentlichen in der Ebene des Lastübertragungsrings 45 radial nach außen durch eine Öffnung 59k des axial verlaufenden Ringbereichs 47 treten, dann mit einem Abschnitt 61k axial zum Ausrücklager 31 hin abbiegen, um danach zwischen den Federzungen 23 und dem Ausrücklager 31 erneut nach radial außen in einem Abschnitt 63k zu verlaufen.

Vor der Montage des Ausrücklagers 31 liegt der Lastübertragungsring 45 im wesentlichen lose in dem Ringbereich 47. Bei der Montage wird der innere Lagerring 35 in den Ringbereich 47 eingesteckt, wobei die Konusfläche 43 den mit seinem Abschnitt 57k (Fig. 3) am Rand 65k der Öffnung 59k anschlagenden Lastübertragungsring 45 aufweitet, bis der Lastübertragungsring 45 aufgrund seiner Eigenspannung hinter die Lastübertragungs-Ringfläche 41 einschnappt. Das Ausrücklager 31 kann dann in Richtung des Pfeils A gezogen werden, bis der Lastübertragungsring 45 auch die Lastübertragungs-Ringfläche 39 kontaktiert. Bei der solchermaßen geschlossenen Schnappverbindung verlaufen die Enden 55 des Lastübertragungsrings 45 berührungsfrei sowohl durch die Öffnung 59k (Fig.3) als auch berührungsfrei bezogen auf die übrigen Komponenten der Ausrückeranordnung 25.

Um zu verhindern, daß der Kraftübertragungskontakt zwischen dem Lastübertragungsring 45 einerseits und den Kraftübertragungs-Ringflächen 39 und 41 andererseits verlorengeht, was zu erhöhtem Verschleiß an den Komponenten der Ausrückeranordnung 25 führen würde, ist auf der Getriebeseite des Ausrückrings 29 ein Vorspannelement vorgesehen.

Im folgenden werden Varianten von Ausrückeranordnungen beschrieben, die sich in erster Linie durch die Art und Anordnungsweise des die Schnappverbindungsmittel axial vorspannenden, federnden Vorspannelements unterscheiden. Gleichwirkende Komponenten sind mit den Bezugszahlen der Fig. 1 bezeichnet und zur Unterscheidung mit einem Buchstaben versehen. Soweit Varianten nachfolgend erläuterter Ausrückeranordnungen beschrieben werden, so werden auch hier gleichwirkende Komponenten mit zuvor benutzten Bezugszahlen und einem unterscheidenden Buchstaben bezeichnet. Zur Erläuterung dieser Komponenten und ihrer wirkungsweise wird jeweils auf die vorangegangene Beschreibung Bezug genommen.

Die Fig. 2 bis 4 zeigen eine Ausrückeranordnung 25k, bei welcher ein in Umfangsrichtung eine Unterbrechung 131k für den Durchtritt der Enden 55k des Lastübertragungsrings 45k bildendes Drahtfederelement 67k zugleich zur Fixierung des Ausrückrings 29k an den Membranfederzungen 23k ausgenutzt wird. Das aus Drahtmaterial mit vorzugsweise runden Querschnitt hergestellte Drahtfederelement 67k hat in Umfangsrichtung verteilt drei Federarmabschnitte 153, von denen jeder einen etwa radial verlaufenden, axial federnden Federarm 155 bildet. Die Federarmabschnitte 153 sind in Umfangsrichtung gegeneinander versetzt und durch bogenförmige Verbindungsabschnitte 157 integral miteinander verbunden. Der Ausrückring 29k hat im Umfangsrichtung beiderseits jedes Federarmabschnitts 153 eine durch die Zwischenräume zwischen den Membranfederzungen 23k tretende, nach radial innen sich öffnende Kralle 51k in die die Verbindungsabschnitte 157 sowie Endabschnitte 159 die sich an die der Unterbrechung 131k benachbarten Federarmabschnitte 153 anschließen, eingehängt sind.

Die Enden 161 der Endabschnitte 159 sind auf der Seite der Unterbrechung 131k nach radial außen abgewinkelt und sorgen für eine Verdrehsicherung des Drahtfederelements 67k.

Wie am besten Fig. 2 zeigt liegt der mittlere Federarmabschnitt 153 des Drahtfederelements 67k den Armen 55k des Lastübertragungsrings 45k bezogen auf die Drehachse 5k diametral gegenüber, während die beiden anderen Federarmabschnitte 153 um gleiche Winkelabstände versetzt der Unterbrechung 131k benachbart sind. Die Federarme 155 der Federarmabschnitte 153 haben in der Draufsicht etwa V-Form mit angenähert radial verlaufenden Schenkeln 163, deren radial äußere Enden in gleichfalls angenähert radial verlaufende Arme 165 übergehen. Die Arme 165 gehen an ihren radial inneren Enden in die in Umfangsrichtung verlaufenden Verbindungsabschnitte 157 bzw. Endabschnitte 159 über. Wie Fig. 3 zeigt, liegt der Verbindungsbereich der beiden Schenkel 163 jedes Federarms 155 an der über einen Absatz 87k des inneren Lagerrings 35k abgestützten Scheibe 85k auf. Die Scheibe 85k bildet wiederum zusammen mit der Deckscheibe 97k des äußeren Lagerrings 33k eine Labyrinthdichtung.

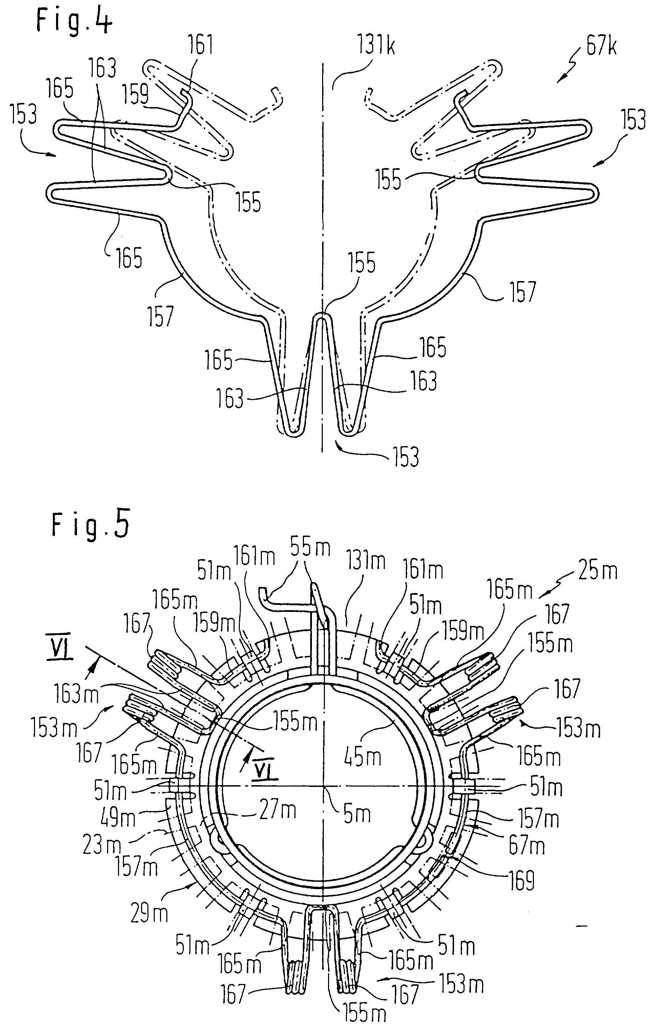

Fig. 4 zeigt Einzelheiten des Drahtfederelements 67k vor dessen Montage. Das Drahtfederelement 67k ist, wie in Fig. 19 durch ausgezogene Linien dargestellt ist, im nicht eingebauten Zustand aufgespreizt und wird beim Einbau in die gestrichelt eingezeichnete Stellung gebogen, so daß es in den Krallen 51k aufgrund seiner radialen Eigenspannung gehalten wird. Das Drahtfederelement 67k läßt sich leicht herstellen und leicht montieren.

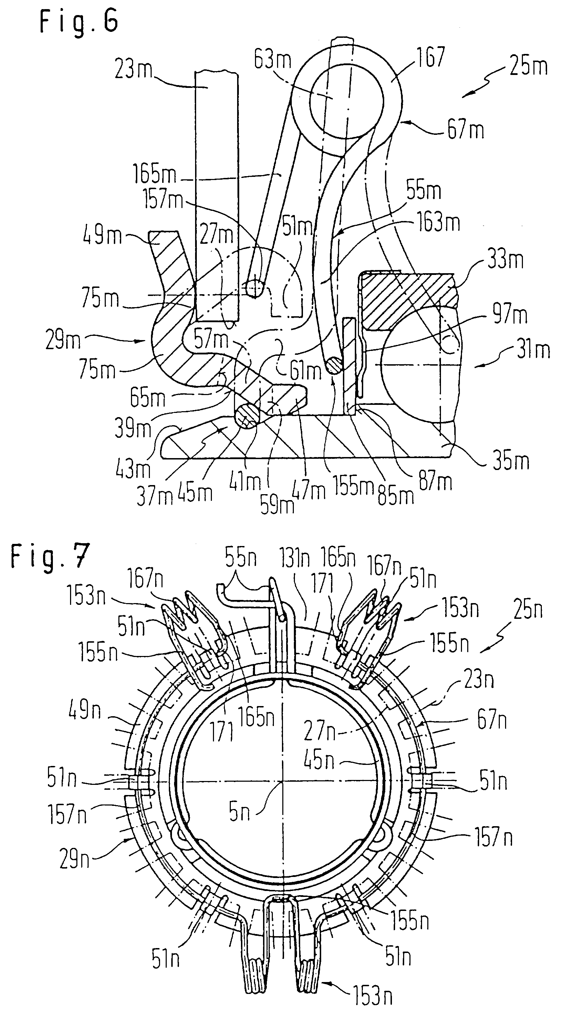

Die Fig. 5 und 6 zeigen eine Ausrückeranordnung 25m, die sich von der Anordnung der Fig. 2 bis 4 lediglich durch die Ausgestaltung ihres Drahtfederelements 67m unterscheidet. Das Drahtfederelement 67m bildet wiederum eine Unterbrechung 131m für den Durchtritt der Enden des Lastübertragungsrings 45m und umfaßt analog zum Drahtfederelement 67k drei Federarmabschnitte 153m, die durch Verbindungsabschnitte 157m miteinander verbunden sind bzw. in Endabschnitte 159m übergehen. Die Verbindungsabschnitte 157m und die Endabschnitte 159m sind unter radialer Eigenspannung durch die Krallen 51m des Ausrückrings 59m geführt. Die Enden 161m der Endabschnitte 159m sind nach radial außen gebogen und fixieren das Drahtfederelement 67m relativ zu den Enden 55m des Lastübertragungsrings 45m.

Jeder der drei entsprechend der Fig. 2 angeordneten Federarmabschnitte 153m bildet einen im vorliegenden Fall im wesentlichen U-förmigen Federarm 155m, der sich mit seinem radial inneren Ende an der zusammen mit der Deckscheibe 97m des äußeren Lagerrings 33m eine Labyrinthdichtung bildenden Scheibe 85m des inneren Lagerrings 35m abstützt. Die radial äußeren Enden der Schenkel 163m sind über schraubenwendelförmige Biegefedern 167 mit im wesentlichen radial verlaufenden Armen 165m verbunden, die ihrerseits in die Verbindungsabschnitte 157m bzw. die Endabschnitte 159m übergehen. Die "haarnadelförmig" geformten Biegefedern 167 erlauben eine Verringerung der radialen Baugröße des Drahtfederelements ohne Beeinträchtigung des maximalen axialen Federwegs seiner Federarme. Das Drahtfederelement kann damit leichter den konstruktiven Erfordernissen angepaßt werden und wird im Betrieb-weniger belastet.

Es versteht sich, daß das Drahtfederelement in jeder der hier in Zusammenhang beschriebenen Ausführungsformen gegebenenfalls auch aus mehreren Drahtabschnitten hergestellt sein kann die, wie bei 169 in Fig. 5 angedeutet beispielsweise durch Verschweißen oder durch eine Hülse miteinander verbunden sind. Die Zusammensetzung des Federelements aus mehreren Teilstücken erleichtert die Lagerhaltung.

Fig. 7 zeigt eine Variante zur Ausrückeranordnung der Fig. 5 und 6. Anders als bei der dort beschriebenen Anordnung 25m umfaßt die Ausrückeranordnung 25n ein Drahtfederelement 67n dessen zwei der Unterbrechung 131n benachbarte Federarmabschnitte 153n einen durch das Ende des Drahtmaterials gebildeten Federarm 155n umfassen. Während der den Enden 55n des Lastübertragungsrings 45n bezogen auf die Drehachse 5n diametral gegenüberliegende mittlere Federarmabschnitt 153n der Ausführungsform nach Fig. 5 entsprechend geformt ist, haben die der Unterbrechung 131n benachbarten Federarmabschnitte 153n schraubenwendelförmige Biegefedern 167n, die jeweils einer der Krallen 51n des Ausrückrings 29n radial gegenüberliegen. Die Verbindungsbereiche 157n der drei Federarmabschnitte 153n verlaufen durch diese radial gegenüberliegenden Krallen 51n und gehen auf der zur Unterbrechung 131n gelegenen Seite in einem Knick 171 in etwa radial nach außen verlaufende Arme 165n über. Die Biegefedern 167n verbinden wiederum die radial äußeren Enden der Arme 165n mit den nach radial innen abstehenden Federarme 155n. Die Federarme 155n liegen mit ihren inneren Enden in der anhand der Fig. 5 und 6 beschriebenen Weise am inneren Lagerring des Ausrücklagers an.

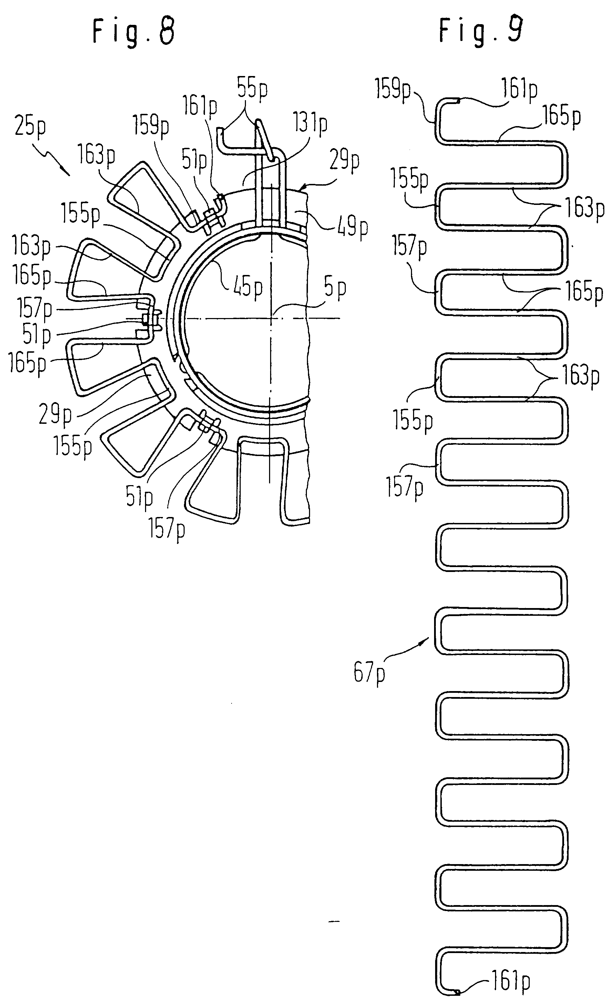

Die Fig. 8 und 9 zeigen eine besonders preiswert herstellbare Variante eines Drahtfederelements 67p, das sich von dem Drahtfederelement 67k der Fig. 2 bis 4 lediglich durch seine gleichförmig mäanderförmige Gestaltung unterscheidet. Das Drahtfederelement 67p hat, wie Fig. 9 zeigt, vor dem Einbau in die Ausrückeranordnung 25p die Gestalt eines mäanderförmigen Streifens, in welchem sich die jeweils einen der Federarme 155p bildenden Windungen mit den die Verbindungsabschnitte 157p bzw. die Endabschnitte 159p bildenden Windungen abwechseln. Auch bei diesem Drahtfederelement hat jeder Federarm 155p im eingebauten Zustand jeweils zwei im wesentlichen radial verlaufende Schenkel 163p, die jeweils in radial verlaufende Arme 165p übergehen. Wie Fig. 8 zeigt tritt jeder der mit einem Federarm 155p abwechselnde Verbindungsabschnitte 157p mit radialer Eigenspannung durch eine der Klauen 51p des Ausrückrings 29p. Die Fixierung in Umfangsrichtung wird durch die radial nach außen abgebogenen Enden 161p gewährleistet. Das Drahtfederelement 67p beläßt auch hier für den Durchtritt der Enden 55p des Lastübertragungsrings 45p eine Unterbrechung 131p. Wenngleich im dargestellten Ausführungsbeispiel der Abstand benachbarter Schenkel 165p gleich dem Abstand benachbarter Arme 163p ist, so sei doch darauf hingewiesen, daß die Abstände gegebenenfalls auch unterschiedlich gewählt sein können. Das Drahtfederelement 67p ist in jedem Fall in axialer Richtung besonders raumsparend und sorgt für eine gleichmäßige Verteilung der Axialkraft in Umfangsrichtung.

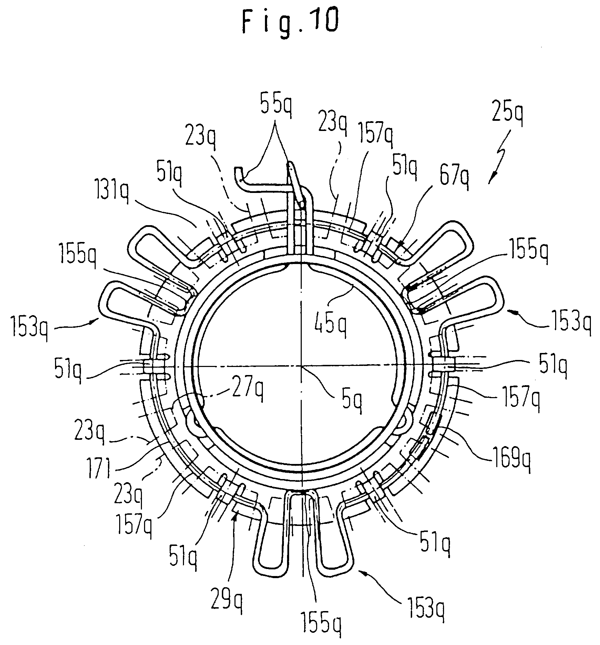

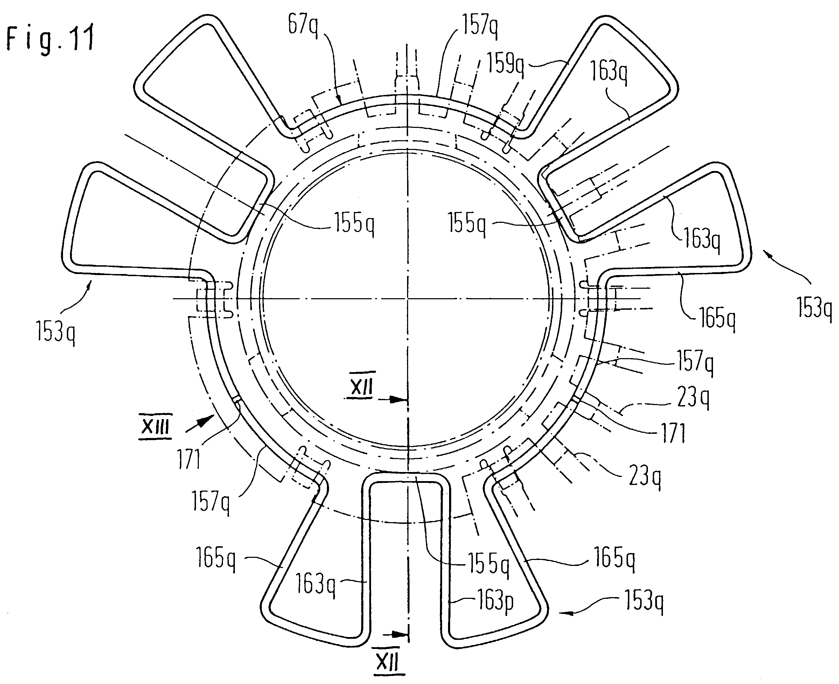

Die Fig. 10 bis 13 zeigen eine Variante einer Ausrückeranordnung 25q mit einem ringförmig geschlossenen Drahtfederelement bzw. Drahtfederring 67q. Der Drahtfederring 67q, der in den Fig. 11 bis 13 im Detail dargestellt ist, umfaßt wiederum drei Federarmabschnitte 153q mit je einem radial verlaufenden, axial ausgestellten Federarm 155q. Die Federarmabschnitte 153q sind in gleichen Winkelabständen voneinander angeordnet und untereinander sämtlich durch bogenförmig gekrümmte Verbindungsabschnitte 157q zu einem geschlossenen, radial elastischen Ring verbunden. Bei Herstellung aus Drahtmaterial sind die Materialenden verschweißt oder, wie bei 169q dargestellt durch eine Hülse verbunden. Die Federarmabschnitte 153q sind ähnlich der Ausführungsform aus Fig. 2 gestaltet, wobei die Federarme 155q im wesentlichen U-Form haben und an den radial äußeren Enden ihrer Schenkel 163q mit im wesentlichen radial verlaufenden Armen 165q verbunden sind (Fig. 11), die in die Verbindungsabschnitte 157q übergehen. Die Verbindungsabschnitte 157q erstrecken sich durch die Krallen 51q, die beiderseits jedes Federarmabschnitts 153q an dem Ausrückring 29q vorgesehen sind. Im Bereich der Enden 55q des Lastübertragungsrings 45q verläuft der Verbindungsabschnitt 157q eng anliegend an den bei 23q in Fig. 10 angedeuteten Membranfederzungen und damit aufgrund der axialen Abwinkelung der Arme 55q, wie sie zum Beispiel bei 61k in Fig. 3 angedeutet ist, außerhalb des Berührungsbereichs der Arme 55q im Bereich 131q zwischen zwei benachbarten Federarmabschnitten 153q. Wenngleich nicht dargestellt, so liegen auch hier die radial inneren Enden der Federarme 155q am inneren Lagerring des Ausrücklagers gegebenenfalls über eine zusätzliche Scheibe an.

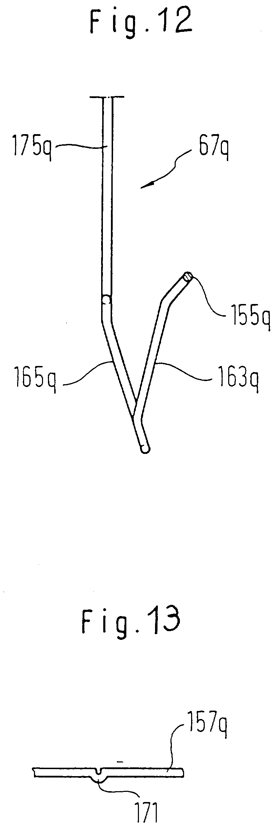

Wie die Fig. 11 und 13 zeigen, sind in die Verbindungsabschnitte 157q Nasen 171 eingebogen, die zur Verdrehsicherung des Drahtfederrings 67q in radiale Schlitze zwischen benachbarten Membranfederzungen 23q eingreifen. Aus Fig. 12 ist zu entnehmen, daß für die bessere Unterbringung der Arme 55q nicht nur die Schenkel 163q der Federarme 155q zu deren axialen Ausstellung geknickt sind, sondern auch die Arme 165q, die die Schenkel 163q mit den Verbindungsabschnitten 157q verbinden.

## Patentansprüche

1. Ausrückeranordnung für eine im Antriebsstrang zwischen einer Brennkraftmaschine und einem Getriebe eines Kraftfahrzeugs angeordnete Reibungskupplung (1), deren zusammen mit der Reibungskupplung (1) um eine Drehachse (5) rotierende, insbesondere durch Federzungen einer Membranfeder (21) gebildete, im wesentlichen radial zur Drehachse (5) hin sich erstreckende Ausrückelemente (23) zum Ausrücken der Reibungskupplung (1) zum Getriebe hin bewegbar sind, umfassend
- einen konzentrisch zur Drehachse (5) an den Ausrückelementen (23) befestigten, auf der Motorseite der Ausrückelemente (23) abgestützten Ausrückring (29),
- ein in Richtung der Drehachse (5) bewegliches Ausrücklager (31) mit einem rotierenden, insbesondere inneren Lagerring (35) und einem nicht rotierenden, insbesondere äußeren Lagerring (33) und
- axial miteinander kuppelbare Schnappverbindungsmittel (39) zwischen dem Ausrückring (29) und dem rotierenden Lagerring (35), umfassend Kraftübertragungsflächen (39, 41), insbesondere angenähert konisch verlaufende Kraftübertragungs-Ringflächen an dem Ausrückring (29) und dem rotierenden Lagerring (35) und wenigstens ein radial federndes Lastübertragungselement (45), insbesondere in Form eines radial federnden Lastübertragungsrings, welches zwischen die Kraftübertragungsflächen (39, 41) schnappbar ist,
wobei zwischen dem Ausrückring (29) oder den Ausrückelementen (23) einerseits, und dem rotierenden Lagerring (35) andererseits ein im wesentlichen ringförmiges, im wesentlichen axial federndes, zur Drehachse (5) konzentrisches Vorspannelement (67) eingespannt ist, welches auf der Getriebeseite der Ausrückelemente (23) angeordnet ist und die Schnappverbindungsmittel (39) axial gegeneinander verspannt,
dadurch gekennzeichnet,
daß von dem Flansch (49k-q) des Ausrückrings (29k-q) in Umfangsrichtung verteilt, mehrere Krallen (51k-q) abstehen, die durch Zwischenräume zwischen den Ausrückelementen (23k-q) hindurchreichen und auf der Getriebeseite der Ausrückelemente (23k-q) nach radial innen gebogen sind,
daß das Vorspannelement (67k-q) in Umfangsrichtung, verteilt wenigstens drei Federabschnitte (153; 153m-q) mit je einem axial federnden, am rotierenden Lagerring (35k-q) abgestützten, angenähert radial verlaufenden Federarm (155; 155m-q) aufweist und daß sich das Vorspannelement (67k-q) in Umfangsrichtung durch die Krallen (51k-q) hindurch erstreckt und in den Krallen (51k-q) durch radiale Eigenspannung gehalten ist.

2. Ausrückeranordnung nach Anspruch 1,
dadurch gekennzeichnet,
daß das Vorspannelement (67k-q) als Drahtfeder ausgebildet ist.

3. Ausrückeranordnung nach Anspruch 2,
dadurch gekennzeichnet,
daß das Vorspannelement (67q) als in Umfangsrichtung geschlossener Drahtfederring ausgebildet ist.

4. Ausrückeranordnung nach Anspruch 3,
dadurch gekennzeichnet,
daß der Drahtfederring (67q) auf der den Ausrückelementen (23q) zugewandten Seite mindestens eine zur Positionierung zwischen die Ausrückelemente (23q) greifende Nase (171) aufweist.

5. Ausrückeranordnung nach Anspruch 1 oder 2,
dadurch gekennzeichnet,
daß das Vorspannelement (67k-p) eine die Enden (55k-p) des Lastübertragungsrings (45k-p) aufnehmende Unterbrechung (131k-p) zwischen zwei benachbarten, auf gegenüberliegenden Seiten der Enden (55k-p) des Lastübertragungsrings (45k-p) angeordneten Krallen (51k-p) bildet.

6. Ausrückeranordnung nach Anspruch 5,
dadurch gekennzeichnet,
daß das Vorspannelement (67k-p) zwischen den beiden der Unterbrechung (131k-p) benachbarten Krallen (51k-p) zur Positionierung nach radial außen gebogene Endabschnitte (161; 161m-p) aufweist.

7. Ausrückeranordnung nach Anspruch 5 oder 6,
dadurch gekennzeichnet,
daß einer der Federarme (155; 155m-p) den Enden (55k-p) des Lastübertragungsrings (45k-p) etwa diametral gegenüberliegt und zwischen zwei in Umfangsrichtung benachbarten Krallen (51k-p) angeordnet ist.

8. Ausrückeranordnung nach Anspruch 7,
dadurch gekennzeichnet,
daß im Bereich der beiden der Unterbrechung (131k-p) benachbarten Krallen (51k-p) je ein weiterer Federarm (155; 155m-p) angeordnet ist.

9. Ausrückeranordnung nach Anspruch 8,
dadurch gekennzeichnet,
daß jeder der weiteren Federarme (155; 155m-p) zwischen der zur Unterbrechung (131k-p) benachbarten Krallen (51k-p) und einer zu dieser in Umfangsrichtung benachbarten weiteren Kralle (51k-p) angeordnet ist.

10. Ausrückeranordnung nach einem der Ansprüche 2 bis 9,
dadurch gekennzeichnet,
daß zumindestens einer, insbesondere jeder Federarm (155; 155m-q) im wesentlichen U-Form oder V-Form hat und zwei angenähert radial verlaufende Schenkel (163; 163m-q) aufweist, die an ihren radial inneren Enden ineinander übergehen und an ihren radial äußeren Enden in angenähert radial verlaufende Arme (165; 165m-q) der einzelnen Federabschnitte (153; 153m-q) übergehen.

11. Ausrückeranordnung nach Anspruch 10,
dadurch gekennzeichnet,
daß Verbindungsbereiche zwischen den radial äußeren Enden der Schenkel (163m, n) des Federarms (155m, n) und den radial verlaufenden Armen (165m, n) als schraubenförmig gewundene Biegefedern (167; 167n) ausgebildet sind.

12. Ausrückeranordnung nach Anspruch 10 oder 11,
dadurch gekennzeichnet,
daß drei Federarme (155; 155m, n, q) vorgesehen sind.

13. Ausrückeranordnung nach Anspruch 10 oder 11,
dadurch gekennzeichnet,
daß eine Vielzahl Federarme (155; 155m-q) vorgesehen ist, und daß die mit den Federarmen (155; 155m-q) verbundenen Arme (165; 165m-q) an ihren radial inneren Enden in Verbindungsabschnitte (157; 157m-q) übergehen, die durch je eine der Krallen (51k-q) geführt sind.

14. Ausrückeranordnung nach Anspruch 13,
dadurch gekennzeichnet,
daß die Drahtfeder (67p) Mäanderform mit gleichförmigen, abwechselnd einen Federarm (155p) oder einen durch eine der Krallen (51p) geführten Verbindungsabschnitt (165p) bildende Windungen hat.

15. Ausrückeranordnung nach einem der Ansprüche 8 bis 12,
dadurch gekennzeichnet,
daß die beiden weiteren Federarme (155n) auf der den Enden (55n) des Lastübertragungsrings (45n) abgewandten Seite der beiden der Unterbrechung (131n) benachbarten Krallen (51n) angeordnet sind und an ihren radial äußeren Enden mit je einem angenähert radial verlaufenden Arm (165n) des Federabschnitts (153n) über eine schraubenförmig gewundene Biegefeder (167n) verbunden sind, und daß die Biegefeder (167) der zur Unterbrechung (131n) benachbarten Kralle (51n) im wesentlichen radial gegenüberliegt, der Arm (165n) an seinem radial inneren Ende abgebogen ist und die Abbiegung (171) durch die Kralle (51n) verläuft.

16. Ausrückeranordnung nach einem der Ansprüche 1 bis 15,
dadurch gekennzeichnet,
daß der rotierende Lagerring (35k, m) des Ausrücklagers (31k, m) eine ringförmige Scheibe (85k, m) trägt, die sich an einem axial zur Stirnfläche des Ausrückrings (35k, m) weisenden Absatz (87k, m) des rotierenden Lagerrings (35k, m) abstützt und an der sich ihrerseits die Federarme (155k-q) mit ihren freien Enden abstützen.

17. Ausrückeranordnung nach einem der Ansprüche 1 bis 16,
dadurch gekennzeichnet,
daß der Ausrückring (29f-q) einen angenähert radial abstehenden, im wesentlichen ringförmigen Flansch (49f-q) hat, mit dem er auf der Motorseite der Ausrückelemente (23f-q) aufliegt, sowie einen im wesentlichen axial sich erstreckenden Ringbereich (47f-q) aufweist, der in eine von-den Ausrückelementen (23f-q) radial begrenzte, zentrische Öffnung (119; 131g-q) hineinreicht und auf seiner inneren Umfangsfläche die Kraftübertragungs-Ringfläche (39f-q) des Ausrückrings (29f-q) bildet, daß der Lastübertragungsring (45f-q) als offener Ring ausgebildet ist, dessen Enden (55f-q) zum Lösen der schnappverbindungsmittel (37f-q) zumindest angenähert in den Raum axial zwischen dem Bereich der die zentrische Öffnung (27f-q) begrenzenden Enden der Ausrückelemente (23f-q) und dem Ausrücklager (31f-m) hineinreichen, und daß das Vorspannelement (67f-q) einen Durchlaßraum (119; 131f-q) bildet oder begrenzt, durch den hindurch die Enden (55f-q) insbesondere berührungsfrei radial nach außen geführt sind.

18. Ausrückeranordnung nach einem der Ansprüche 1 bis 17,
dadurch gekennzeichnet,
daß der nicht rotierende, äußere Lagerring (33) auf seiner den Ausrückelementen (23) zugewandten Seite eine nach radial innen reichende, in geringem Abstand vom rotierenden, inneren Lagerring (35) endende Deckscheibe (97 k,m) trägt und daß am rotierenden Lagerring (35) eine in geringem Abstand zur Deckscheibe (97 k,m) angeordnete Scheibe (85 k,m) angeordnet ist, die zusammen mit der Deckscheibe (97 k,m) eine Labyrinthdichtung bildet und an der das Vorspannelement (67 k-q) axial abgestützt ist.

## Claims

1. Release arrangement for a friction clutch (1) arranged in the drive train between an internal combustion engine and a transmission of a motor vehicle, in which the releasing elements (23), which rotate together with the friction clutch (1) about an axis of rotation (5), are formed in particular by spring tongues of a diaphragm spring (21) and extend substantially radially to the axis of rotation (5), are movable towards the transmission for release of the friction clutch (1), comprising:
- a releasing ring (29) fastened on the releasing elements (23) concentrically to the axis of rotation (5) and supported on the motor side of the releasing elements (23),
- a releasing bearing (31) movable in the direction of the axis of rotation (5) with a rotating, in particular inner, bearing ring (35) and a non-rotating, in particular outer, bearing ring (33), and
- snap connection means (39), which may be coupled together axially, between the releasing ring (29) and the rotating bearing ring (35), comprising force-transmitting surfaces (39, 41), in particular force-transmitting ring surfaces running approximately conically on the releasing ring (29) and the rotating bearing ring (35), and at least one radially resilient load-transmitting element (45), in particular in the form of a radially resilient load-transmitting ring, which may be snapped between the force-transmitting surfaces (39, 41),
wherein between the releasing ring (29) or the releasing elements (23), on the one hand, and the rotating bearing ring (35), on the other hand, a substantially ring-shaped, essentially axially resilient prestressing element (67) concentric to the axis of rotation (5) is inserted, which is arranged on the transmission side of the releasing elements (23) and clamps the snap connection means (39) axially relative to one another,
characterised in that
several claws (51k-q), which are distributed in peripheral direction, pass through interspaces between the releasing elements (23k-q) and are bent radially inwards on the transmission side of the releasing elements (23k-q), project from the flange (49k-q) of the releasing ring (29k-q);
that the prestressing element (67k-q) has at least three spring sections (153; 153m-q) distributed in peripheral direction, each having an axially resilient spring arm (155; 155m-q) supported on the rotating bearing ring (35k-q) and running approximately radially; and
that the prestressing element (67k-q) extends in peripheral direction through the claws (51k-q) and is held in the claws (51k-q) by inherent radial tension.

2. Release arrangement according to Claim 1,
characterised in that the prestressing element (67k-q) is constructed as a wire spring.

3. Release arrangement according to Claim 2,
characterised in that the prestressing element (67q) is constructed as a wire spring ring closed in peripheral direction.

4. Release arrangement according to Claim 3,
characterised in that on the side facing the releasing elements (23q), the wire spring ring (67q) has at least one nose (171) engaging between the releasing elements (23q) for positioning.

5. Release arrangement according to Claim 1 or 2,
characterised in that the prestressing element (67k-p) forms a break (131k-p) receiving the ends (55k-p) of the load-transmitting ring (45k-p) between two adjacent claws (51k-p) arranged on opposite sides of the ends (55k-p) of the load-transmitting ring (45k-p).

6. Release arrangement according to Claim 5,
characterised in that between the two claws (51k-p) adjacent to the break (131k-p), the prestressing element (67k-p) has end sections (161; 161m-p) bent radially outwards for positioning.

7. Release arrangement according to Claim 5 or 6,
characterised in that one of the spring arms (155; 155m-p) is approximately diametrically opposed to the ends (55k-p) of the load-transmitting ring (45k-p) and is arranged between two claws (51k-p) adjacent in peripheral direction.

8. Release arrangement according to Claim 7,
characterised in that a further spring arm (155; 155m-p) is arranged in the region of each of the two claws (51k-p) adjacent to the break (131k-p).

9. Release arrangement according to Claim 8,
characterised in that each of the further spring arms (155; 155m-p) is arranged between the claws (51k-p) adjacent to the break (131k-p) and a further claw (51k-p) adjacent to the latter in peripheral direction.

10. Release arrangement according to one of Claims 2 to 9,
characterised in that at least one, in particular each, spring arm (155; 155m-q) has a substantially U-shape or V-shape and has two approximately radially extending legs (163; 163m-q) which merge into one another at their radially inner ends and at their radially outer ends merge into approximately radially extending arms (165; 165m-q) of the individual spring sections (153; 153m-q).

11. Release arrangement according to Claim 10,
characterised in that connecting regions between the radially outer ends of the legs (163m, n) of the spring arm (155m, n) and the radially extending arms (165m, n) are constructed as helically coiled spiral springs (167; 167n).

12. Release arrangement according to Claim 10 or 11,
characterised in that three spring arms (155; 155m, n, q) are provided.

13. Release arrangement according to Claim 10 or 11,
characterised in that a plurality of spring arms (155; 155m-q) are provided; and that the arms (165; 165m-q) connected to the spring arms (155; 155m-q) merge at their radially inner ends into connecting sections (157; 157m-q), each of which is directed through one of the claws (51k-q).

14. Release arrangement according to Claim 13,
characterised in that the wire spring (67p) has a meander shape with uniform coils alternately forming a spring arm (155p) or a connecting section (165p) directed through one of the claws (51p).

15. Release arrangement according to one of Claims 8 to 12, characterised in that the two further spring arms (155n) are arranged on the side of the two claws (51n) adjacent to the break (131n) facing away from the ends (55n) of the loading transmitting ring (45n), and at each of their radially outer ends are connected to an approximately radially extending arm (165n) of the spring section (153n) by means of a helically coiled spiral spring (167n); and that the spiral spring (167) is substantially radially opposed to the claw (51n) adjacent to the break (131n), the arm (165n) is bent off at its radially inner end and the bent-off portion (171) passes through the claw (51n).

16. Release arrangement according to one of Claims 1 to 15, characterised in that the rotating bearing ring (35k, m) of the releasing bearing (31k, m) carries an annular disc (85k, m) which is supported on a shoulder (87k, m) of the rotating bearing ring (35k, m) pointing axially towards the face of the releasing ring (35k, m), and on which the free ends of the spring arms (155k-q) are in turn supported.

17. Release arrangement according to one of Claims 1 to 16, characterised in that the releasing ring (29f-q) has a substantially annular flange (49f-q) projecting approximately radially, which lies on the motor side of the releasing elements (23f-q), and also has a substantially axially extending ring region (47f-q), which extends into a central opening (119; 131g-q) radially defined by the releasing elements (23f-q), and on its inner peripheral surface forms the force-transmitting ring surface (39f-q) of the releasing ring (29f-q); that the load-transmitting ring (45f-q) is constructed as an open ring, the ends (55f-q) of which extend axially at least approximately into the space between the region of the ends of the releasing elements (23f-q) defining the central opening (27f-q) and the releasing bearing (31f-q) for release of the snap connection means (37f-q); and that the prestressing element (67f-q) forms or defines a passage space (119; 131f-q), through which the ends (55f-q) are directed radially outwards and in particular without contact.

18. Release arrangement according to one of Claims 1 to 17, characterised in that on its side facing the releasing elements (23), the non-rotating outer bearing ring (33) has a cover disc (97k, m) extending radially inwards and terminating at a short distance from the rotating inner bearing ring (35); and that a disc (85k, m), which is arranged at a short distance from the cover disc (97k, m), forms a labyrinth seal together with the cover disc (97k, m) and on which the prestressing element (67k-q) is supported axially, is arranged on the rotating bearing ring (35).

## Revendications

1. Dispositif de débrayage pour un embrayage à friction (1) placé sur la ligne d'entraînement entre un moteur à combustion interne et une boîte de vitesse d'un véhicule, dont les éléments de débrayage (23), formés par des lames flexibles d'un ressort à membrane (21), tournant autour d'un axe de rotation (5) avec l'embrayage à friction et s'étendant sensiblement dans le sens radial par rapport à l'axe de rotation (5), sont mobiles en direction de la boîte de vitesse pour débrayer l'embrayage à friction (1), comprenant :
- une bague de débrayage (29) fixée sur les éléments de débrayage (23) de manière concentrique à l'axe de rotation (5) et appuyée sur le côté moteur des éléments de débrayage (23),
- une butée de débrayage (31) mobile dans la direction de l'axe de rotation (5), avec une bague rotative, en particulier intérieure (35), et une bague non rotative, en particulier extérieure (33), et
- des moyens de liaison par encliquetage (39) se couplant de manière axiale les uns aux autres entre la bague de débrayage (29) et la bague rotative (35), comprenant des surfaces de transmission de force (39, 41), en particulier des surfaces annulaires de transmission de force sensiblement coniques sur la bague de débrayage (29) et sur la bague rotative (35), et au moins un élément de transfert de charge (45) flexible dans le sens radial, en particulier sous la forme d'une bague de transfert de charge flexible dans le sens radial, qui s'enclenche entre les surfaces de transmission de force (39, 41),
un élément de précontrainte (67) concentrique à l'axe de rotation (5), flexible sensiblement dans le sens axial et sensiblement annulaire étant inséré entre la bague de débrayage (29) ou les éléments de débrayage (23) d'une part et la bague rotative (35) d'autre part, élément de précontrainte qui est placé du côté boîte de vitesse des éléments de débrayage (23) et qui serre dans le sens axial les moyens de liaison par encliquetage (29) les uns contre les autres,
caractérisé en ce que
plusieurs griffes (51k-q) dépassent de la bride (49k-q) de la bague de débrayage (29k-q) en étant réparties dans la direction de la circonférence, qui s'introduisent à travers des interstices entre les éléments de débrayage (23k-q) et sont recourbées dans le sens radial vers l'intérieur du côté boîte de vitesse des éléments de débrayage (23k-q),
en ce que l'élément de précontrainte (67k-q) présente, réparties dans la direction de la circonférence, au moins trois sections flexibles (153; 153m-q) avec chacune un bras flexible (155; 155m-q) sensiblement radial, flexible dans le sens axial et appuyé sur la bague rotative (35k-q), et en ce que l'élément de précontrainte (67k-q) s'étend dans la direction de la circonférence à travers les griffes (51k-q) et est maintenu dans les griffes (51k-q) par sa tension radiale propre.

2. Dispositif de débrayage selon la revendication 1, caractérisé en ce que l'élément de précontrainte (67k-q) est conformé en ressort en fil.

3. Dispositif de débrayage selon la revendication 2, caractérisé en ce que l'élément de précontrainte (67q) est conformé en couronne ressort en fil fermée dans la direction de la circonférence.

4. Dispositif de débrayage selon la revendication 3, caractérisé en ce que la couronne ressort en fil (67q) présente du côté tourné vers les éléments de débrayage (23q) au moins un nez (171) s'engageant entre les éléments de débrayage (23q) pour le positionnement.

5. Dispositif de débrayage selon la revendication 1 ou 2, caractérisé en ce que l'élément de précontrainte (67k-p) forme une interruption (131k-p) recevant les extrémités (55k-p) de la bague de transfert de charge (45k-p) entre deux griffes (51k-p) voisines situées sur des côtés opposés des extrémités (55k-p) de la bague de transfert de charge (45k-p).

6. Dispositif de débrayage selon la revendication 2, caractérisé en ce que l'élément de précontrainte (67k-p) présente entre les deux griffes (51k-p) voisines de l'interruption (131k-p) des sections d'extrémité (161; 161m-p) recourbées vers l'extérieur dans le sens radial pour le positionnement.

7. Dispositif de débrayage selon la revendication 5 ou 6, caractérisé en ce que l'un des bras flexibles (155; 155m-p) est sensiblement diamétralement opposé aux extrémités (55k-p) de la bague de transfert de charge (45k-p) et est placé entre des griffes (51k-p) voisines sur la circonférence.

8. Dispositif de débrayage selon la revendication 7, caractérisé en ce que, au niveau des deux griffes (51k-p) voisines de l'interruption (131k-p), est placé à chaque fois un autre bras flexible (155; 155m-p).

9. Dispositif de débrayage selon la revendication 8, caractérisé en ce que chacun des autres bras flexibles (155; 155m-p) est placé entre les griffes (51k-p) voisines de l'interruption (131k-p) et une autre griffe (51k-p) voisine de celles-ci sur la circonférence.

10. Dispositif de débrayage selon l'une des revendications 2 à 9, caractérisé en ce qu'au moins un, en particulier chaque bras flexible (155; 155m-q) a une forme sensiblement en U ou en V et présente deux branches (163; 163m-q) sensiblement radiales, qui se raccordent l'une à l'autre au niveau de leurs extrémités radialement intérieures et se raccordent au niveau de leurs extrémités radialement extérieures sur des bras sensiblement radiaux (165; 165m-q) des diverses sections flexibles (153; 153m-q).

11. Dispositif de débrayage selon la revendication 10, caractérisé en ce que des zones de jonction situées entre les extrémités radialement extérieures des branches (163m, n) du bras flexible (155m, n) et les bras radiaux (165m, n) sont conformées en ressorts de flexion (167; 167n) enroulés en forme hélicoïdale.

12. Dispositif de débrayage selon la revendication 10 ou 11, caractérisé en ce que trois bras flexibles (155; 155m, n, q) sont prévus.

13. Dispositif de débrayage selon la revendication 10 ou 11, caractérisé en ce qu'une pluralité de bras flexibles (155; 155m-q) est prévue, et en ce que les bras (165; 165m-q) reliés aux bras flexibles (155; 155m-q) se raccordent à leurs extrémités radialement intérieures à des sections de jonction (157; 157m-q) qui passent chacune à travers l'une des griffes (51k-q).

14. Dispositif de débrayage selon la revendication 13, caractérisé en ce que le ressort en fil (67p) a une forme ondulée avec des ondulations régulières formant en alternance un bras flexible (155p) ou une section de jonction (165p) passant à travers l'une des griffes (51p).

15. Dispositif de débrayage selon l'une des revendications 8 à 12, caractérisé en ce que les deux autres bras flexibles (155n) sont placés du côté opposé aux extrémités (55n) de la bague de transfert de charge (45n) des griffes (51n) voisines de l'interruption (131n), et sont reliés, à leurs extrémités radialement extérieures, chacun à un bras sensiblement radial (165n) de la section flexible (153n) par l'intermédiaire d'un ressort de flexion (167n) enroulé en forme hélicoïdale, et en ce que le ressort en fil (167n) se trouve sensiblement opposé dans le sens radial aux griffes (51n) voisines de l'interruption (131n), le bras (165n) étant recourbé à son extrémité intérieure radiale et la partie coudée (171) passant à travers la griffe (51n).

16. Dispositif de débrayage selon l'une des revendications 1 à 15, caractérisé en ce que la bague support rotative (35k, m) de la butée de débrayage (31k, m) porte un disque annulaire (85k, m), qui s'appuie sur un épaulement (87k, m) de la bague rotative (35k, m) tourné dans le sens axial vers la surface frontale de la bague de débrayage (35k, m) et sur lequel les bras flexibles (155k-q) s'appuient à leur tour par leurs extrémités libres.

17. Dispositif de débrayage selon l'une des revendications 1 à 16, caractérisé en ce que la bague de débrayage (29f-q) possède une bride sensiblement annulaire (49f-q) en saillie sensiblement radiale, par laquelle elle s'appuie sur le côté moteur des éléments de débrayage (23f-q), ainsi qu'une zone annulaire (47f-q) d'extension sensiblement axiale, qui s'enfonce dans une ouverture centrale (119; 131g-q) délimitée dans le sens radial par les éléments de débrayage (23f-q) et forme sur sa surface de pourtour intérieure la surface annulaire de transmission de force (39f-q) de la bague de débrayage (29f-q), en ce que la bague de transfert de charge (45f-q) est conformée en anneau ouvert, dont les extrémités, pour libérer les moyens de liaison par encliquetage (37f-q), s'enfoncent au moins sensiblement de manière axiale dans l'espace situé entre la zone des extrémités des éléments de débrayage (23f-q) délimitant l'ouverture centrale (27f-q) et la butée de débrayage (31f-m), et en ce que l'élément de précontrainte (67f-q) forme ou limite un passage (119; 131f-q), à travers lequel les extrémités (55f-q) passent vers l'extérieur dans le sens radial, en particulier sans contact.

18. Dispositif de débrayage selon l'une des revendications 1 à 17, caractérisé en ce que la bague extérieure non rotative (33) porte sur sa face tournée vers les éléments de débrayage (23) un disque de fermeture (97k, m) tourné vers l'intérieur dans le sens radial et se terminant à faible distance de la bague intérieure rotative (35), et en ce que, sur la bague rotative (35), est placé un disque (85k, m) situé à faible distance du disque de fermeture (97k, m), qui forme avec le disque de fermeture (97k, m) un joint labyrinthe et sur lequel est appuyé l'élément de précontrainte (67k-q).
